# EUROPÄISCHE PATENTSCHRIFT

(11) **EP 0 689 904 B1**
(45) Veröffentlichungstag und Bekanntmachung des Hinweises auf die Patenterteilung: **10.12.1997**
(21) Anmeldenummer: 95109257.6
(22) Anmeldetag: 14.06.1995
(51) Int. Cl.: B25J 21/02, H01J 9/395

(54) **Glovebox**
Glove box
Boîte à gants

(30) Priorität: 29.06.1994 DE 4422419
(43) Veröffentlichungstag der Anmeldung: 03.01.1996
(73) Patentinhaber: Patent-Treuhand-Gesellschaft für elektrische Glühlampen mbH, 81543 München (DE)
(72) Erfinder: Lang, Dieter, D-83607 Holzkirchen (DE); Schlögl, Anton, D-86426 Langweid (DE); Deckardt, Dieter, D-86161 Augsburg (DE)

(56) Entgegenhaltungen:
- EP-A- 0 309 351
- FR-A- 1 250 185
- FR-A- 1 282 653
- FR-A- 2 293 288

## Beschreibung

Die Erfindung betrifft eine Glove-Box gemäß dem Oberbegriff des Patentanspruchs 1. Insbesondere handelt es sich um eine Glove-Box mit einer Schutzgasatmosphäre, in der Gasentladungslampen, an deren Füllung bezüglich ihrer Reinheit höchste Ansprüche gestellt werden, mit einer ionisierbaren Füllung versehen werden.

Bei der Fertigung von niederwattigen Hochdruckentladungslampen muß das Einbringen der ionisierbaren Füllung in das Entladungsgefäß mit besonderer Sorgfalt erfolgen, da niederwattige Hochdruckentladungslampen relativ kleine Entladungsvolumina und entsprechend gering dosierte Füllungskomponenten besitzen, so daß bereits geringe Verunreinigungen im Entladungsvolumen die Lichtemission der Lampe beeinflussen oder gar zum Ausfall der Lampe führen können. Spül- und Füllprozesse an einem gewöhnlichen Pumpstand, wie er für andere Gasentladungslampen gebräuchlich ist, sind daher mit erheblichen Risiken verbunden.

Die Fertigung von Natrium-Hochdruckentladungslampen erfolgt üblicherweise größtenteils in einer Glove-Box unter Schutzgasatmosphäre. Zur Bearbeitung werden die Natrium-Hochdruckentladungslampen bzw. ihre Vorprodukte chargenweise über eine oder mehrere Schleusen in den Innenraum der Glove-Box eingeschleust. Im Inneren der Glove-Box befinden sich Arbeitsgeräte zur Bearbeitung der Lampenvorprodukte, die untereinander durch ein Transportsystem für die Lampenvorprodukte verkettet sind und einen hohen Automationsgrad aufweisen, um eine hohe Einstelleistung zu erzielen.

Diese Technologie läßt sich aber nicht ohne weiteres auf die Fertigung von anderen Hochdruckentladungslampentypen wie zum Beispiel Quecksilberdampf-Hochdruckentladungslampen oder Halogenmetalldampf-Hochdruckentladungslampen übertragen, da einige der bei diesen Lampen erforderlichen Fertigungsschritte, wie z. B. das Abdichten der Entladungsgefäßenden und das Ausfrieren der Edelgasfüllungskomponente, nur mit einem sehr hohen, kaum vertretbaren technischen Aufwand in einer Glove-Box realisiert werden können.

Außerdem führt der hohe Automationsgrad der Arbeitsabläufe innerhalb der Glove-Box zu geringfügigen Verunreinigungen durch Staub, Abrieb und Schmiermitteldämpfe, die bei der Fertigung von Entladungslampen mit extrem kleinem Entladungsvolumen bis hinunter zu nur 0,03 cm³ und entsprechend gering dosierten Füllungskomponenten, wie z. B. bei niederwattigen, in Kfz-Scheinwerfern verwendeten Hochdruckentladungslampen, nicht mehr toleriert werden können. Andererseits kann aber, zur Erzielung einer hohen Einstelleistung, auch bei der Fertigung von niederwattigen Hochdruckentladungslampen auf einen hohen Automationsgrad der Arbeitsabläufe nicht verzichtet werden.

FR-A1-2 293 288 offenbart eine Glove-Box gemäß dem Oberbegriff des Anspruchs 1.

Es ist die Aufgabe der Erfindung, eine Glove-Box bereitzustellen, die zur Fertigung von Produkten, insbesondere von elektrischen Lampen, die besonders hohe Ansprüche an die Reinheit der Schutzgasatmosphäre im Innenraum der Glove-Box stellen, geeignet ist und eine hohe Einstelleistung ermöglicht.

Diese Aufgabe wird erfindungsgemäß durch die Merkmale des Patentanspruchs 1 gelöst. Besonders vorteilhafte Ausführungen der Erfindung sind in den Unteransprüchen beschrieben.

Die erfindungsgemäße Glove-Box besitzt einen drehbar gelagerten Boden, der mit einer Vielzahl von Produktaufnahmen zur Halterung der zu bearbeitenden Vorprodukte oder Halbzeuge ausgestattet ist. Die Produktaufnahmen besitzen jeweils eine gasdicht verschließbare Durchführung, sind entlang eines Kreises bzw. eines Kreisbogens, konzentrisch zur Drehachse des Bodens, angeordnet und haltern die Vorprodukte bzw. Halbzeuge derart, daß ein Teilbereich der Vorprodukte oder Halbzeuge für die im Inneren der Glove-Box unter Schutzgasatmosphäre befindlichen Bearbeitungsvorrichtungen zugänglich ist, während gleichzeitig ein anderer Teilbereich dieser Vorprodukte oder Halbzeuge für die außerhalb der Glove-Box angeordneten Arbeitsgeräte verfügbar ist. Dadurch ist es möglich, nur diejenigen Arbeitsabläufe, die unbedingt unter Schutzgasatmosphäre ausgeführt werden müssen, innerhalb der Glove-Box zu verrichten, während alle anderen Fertigungsschritte ausserhalb der Glove-Box erfolgen. Damit müssen auch nur die zur Ausführung der unter Schutzgasatmosphäre ablaufenden Arbeitsvorgänge erforderlichen Bearbeitungsvorrichtungen im Innenraum der Glove-Box montiert werden, während alle anderen Arbeitsgeräte außerhalb der Glove-Box angeordnet sind. Diese Maßnahme reduziert die in der Glove-Box-Schutzgasatmosphäre auftretenden Verunreinigungen erheblich. Außerdem müssen die zu bearbeitenden Vorprodukte oder Halbzeuge bei der erfindungsgemäßen Glove-Box nicht mehr chargenweise in den Innenraum eingeschleust werden. Ferner erfordert die erfindungsgemäße Glove-Box im Innenraum keine Transportsysteme für die zu bearbeitenden Vorprodukte oder Halbzeuge.

Die Bearbeitungsvorrichtungen und Arbeitsgeräte sind ober- bzw. unterhalb des durch die Produktaufnahmen definierten Kreises oder Kreisbogens angeordnet, so daß durch eine im Arbeitstakt der Bearbeitungsvorrichtungen und der Arbeitsgeräte erfolgende Rotation des Glove-Box-Bodens die in den Produktaufnahmen gehalterten Vorprodukte oder Halbzeuge den verschiedenen Bearbeitungsvorrichtungen und Arbeitsgeräten direkt zugeführt werden und somit eine hohe Einstelleistung realisiert werden kann.

Die Abdichtung des Glove-Box-Bodens übernimmt vorteilhafterweise eine ringförmige, mit Trockengleitlagersegmenten versehene Dichtung, die gegen den Glove-Box-Boden gepreßt wird. Den erforderliche Andruck erzeugt bei einem ersten bevorzugten Ausführungsbeispiel ein in der Glove-Box-Wand, oberhalb der Dichtung angeordneter aufblasbarer ringförmiger Schlauch. Es ist aber auch möglich, den erforderlichen Andruck auf andere Weise zu erzeugen. Beim zweiten Ausführungsbeispiel wird der erforderliche Andruck mit Hilfe von Rollenböcken gewährleistet, die die gegeneinander bewegten Teile des Glove-Box-Bodens und der Glove-Box-Haube genau zueinander positionieren.

Die Dichtung selbst ist mit einem umlaufenden Sperrkanal ausgestattet, der mit Inertgas gespült wird, um ein Eindiffundieren von Luft in das Innere der Glove-Box zu verhindern. Der Gasdruck innerhalb der Glove-Box liegt vorteilhafterweise geringfügig oberhalb des außerhalb der Glove-Box herrschenden Luftdruckes, so daß das Eindringen von Luft und anderen Verunreinigungen in den Innenraum der Glove-Box erschwert wird.

Nachstehend wird die Erfindung anhand zweier Ausführungsbeispiele näher erläutert. Es zeigen:
- Figur 1: Eine stark schematisierte Darstellung einer erfindungsgemäßen Glove-Box
- Figur 2: Eine schematisierte Seitenansicht der erfindungsgemäßen Glove-Box teilweise geschnitten dargestellt
- Figur 3: Einen Querschnitt durch die Abdichtung des Glove-Box-Bodens und eine Produktaufnahme gemäß des ersten Ausführungsbeispiels
- Figur 4: Einen Querschnitt durch die Abdichtung des Glove-Box-Bodens gemäß des zweiten Ausführungsbeispiels

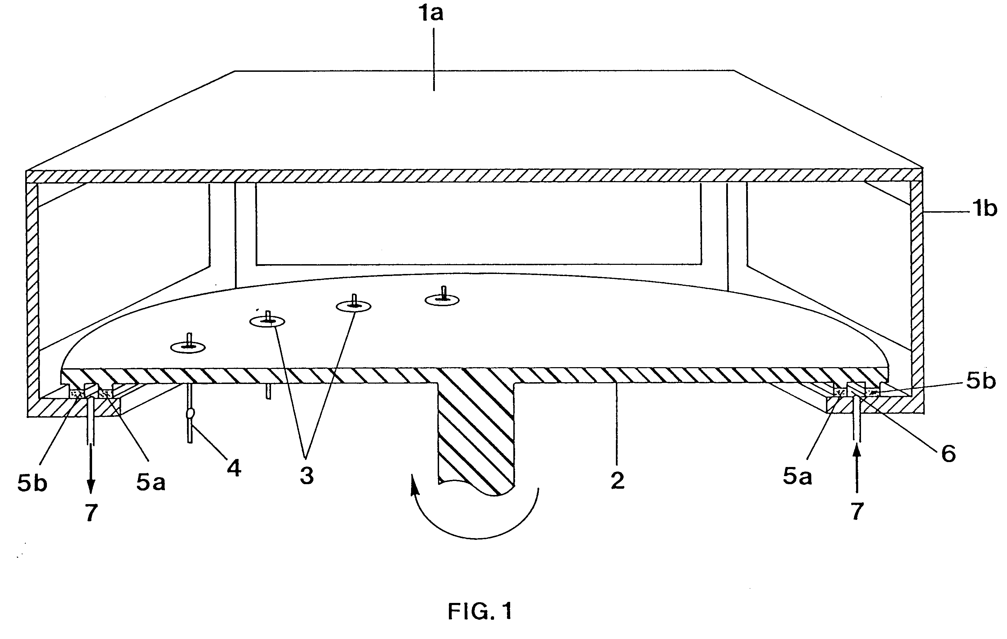

Die stark schematisierte Darstellung in Figur 1 illustriert das Grundprinzip der erfindungsgemäßen Glove-Box. Sie besitzt eine Haube mit Decken- 1a und Seitenteil 1b und einen drehbar gelagerten Boden 2, der mit einer Vielzahl von Produktaufnahmen 3 zur Halterung von Vorprodukten 4 ausgestattet ist. Bei den Vorprodukten 4 handelt es sich um Entladungsgefäße von niederwattigen Hochdruckentladungslampen. Das obere Ende der Entladungsgefäße 4 befindet sich im Innenraum der Glove-Box 1 unter Schutzgasatmosphäre, so daß das Entladungsvolumen mit der Schutzgasatmosphäre kommuniziert, während das untere Ende der Entladungsgefäße 4 außerhalb der Glove-Box 1 angeordnet ist.

Das Einbringen der Füllungskomponenten kann nun mittels innerhalb der Glove-Box montierter Bearbeitungsvorrichtungen unter Schutzgasatmosphäre erfolgen, während beispielsweise das Ausheizen und Dichtquetschen des Entladungsgefäßes 4 durch ausserhalb der Glove-Box 1 befindliche Arbeitsgeräte bewerkstelligt wird. Durch eine Rotation des Glove-Box-Bodens 2 im Maschinenarbeitstakt werden die in den Produktaufnahmen gehalterten Entladungsgefäße 4 den verschiedenen Bearbeitungswerkzeugen innerhalb und außerhalb der Glove-Box 1 zugeführt. Die Abdichtung 5a, 5b des Glove-Box-Bodens 2 ist doppelwandig ausgeführt. Ihre beiden Wände 5a, 5b definieren einen ringförmigen Sperrkanal 6, der mit Inertgas 7 gespült wird.

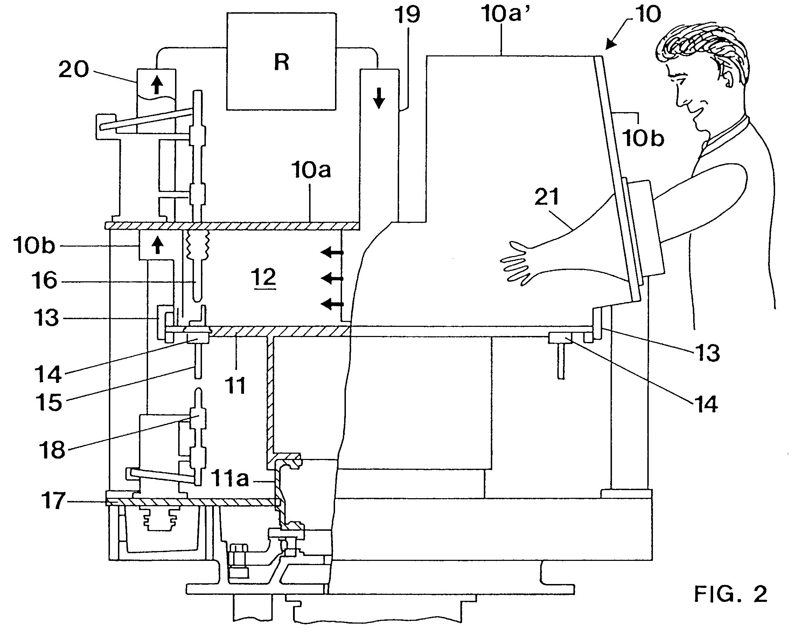

Figur 2 zeigt eine teilweise geschnittene Seitenansicht einer erfindungsgemäßen Glove-Box. Diese Glove-Box besteht aus einer Haube 10 mit Deckenteilen 10a, 10a' und Seitenteilen 10b sowie aus einem Boden 11, die einen gasdicht verschlossenen Innenraum 12 definieren. Der Glove-Box-Innenraum 12 ist über in den Innenraum 12 hineinragende, gasdicht mit dem Seitenteil 10b abschließende Handschuhe 21 für manuelle Eingriffe zugänglich.

Der Glove-Box-Boden 11 ist kreisscheibenartig ausgebildet und um seine vertikale Achse drehbar über einen Kranz 11b gelagert. Der Durchmesser des Bodens 11 beträgt ungefähr 110 cm. Zwischen dem Bodenrand und dem Seitenteil 10b der Haube 10 befindet sich eine ringförmige Abdichtung 13. Im Boden 11 sind 24 Produktaufnahmen 14 montiert, die äquidistant entlang eines konzentrisch zur Bodendrehachse verlaufenden Kreises angeordnet sind und zur Halterung eines Entladungsgefäßes 15 einer Hochdruckentladungslampe dienen.

Das Deckenteil 10a liegt parallel zum Glove-Box-Boden 11 und dient als Montageplattform für die im Innenraum 12 der Glove-Box montierten Bearbeitungsvorrichtungen 16. Diese Bearbeitungsvorrichtungen 16 sind oberhalb der Produktaufnahmen 14, längs des durch die Produktaufnahmen 14 definierten Kreises angeordnet. Unterhalb des drehbaren Glove-Box-Bodens 11 befindet sich, parallel zu diesem, eine zweite, stationäre Montageplattform 17, die mit Arbeitsgeräten 18 bestückt ist. Diese Arbeitsgeräte 18 dienen zur Bearbeitung der Entladungsgefäße 15 außerhalb des Glove-Box-Innenraumes 12 und führen solche Fertigungsschritte wie z. B. das Erhitzen und Quetschen der Entladungsgefäßenden aus, während die Bearbeitungsvorrichtungen 16 im Glove-Box-Innenraum 12 beispielsweise das Einbringen der Füllungskomponenten in das Entladungsvolumen übernehmen. Der Glove-Box-Boden 11 rotiert im Arbeitstakt der Bearbeitungswerkzeuge 16, 18, so daß die in den Produktaufnahmen 14 gehalterten Entladungsgefäße 15 nacheinander den Werkzeugen 16, 18 an den verschiedenen Bearbeitungsstationen zugeführt werden.

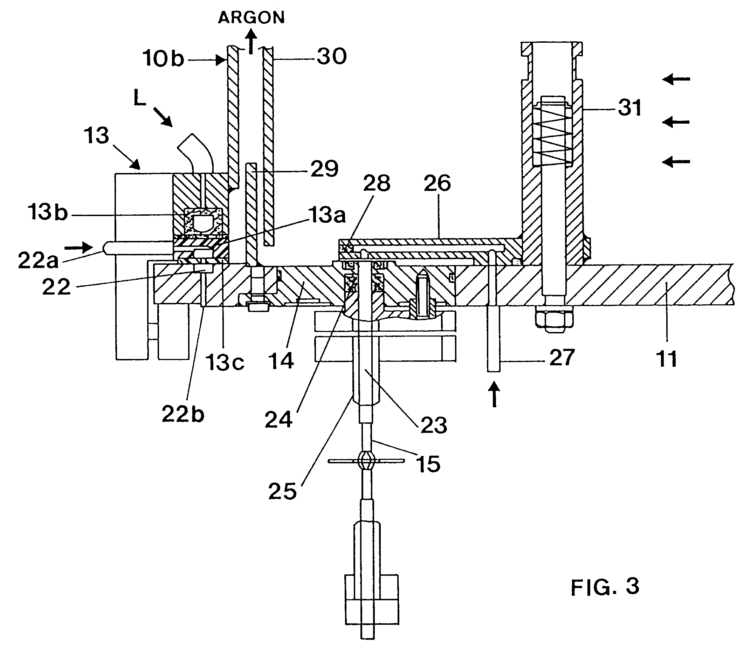

Der Innenraum 12 der Glove-Box enthält eine Argon-Atmosphäre, deren Gasdruck geringfügig oberhalb des äußeren Luftdruckes liegt, um ein Eindringen von Luft oder anderen Verunreinigungen in die Glove-Box zu verhindern. Das Argon durchläuft einen Kreisprozeß. Es wird dem Glove-Box-Innenraum 12 von einer Argon-Reinigungsanlage R über eine axial im Deckenteil 10a angebrachte Zuleitung 19 zugeführt und über exzentrisch im Deckenteil 10a angebrachte Absaugvorrichtungen 20 zur Argon-Reinigungsanlage R zurückgeleitet. Dadurch entsteht einerseits im Innenraum 12 der Glove-Box eine radial nach außen gerichtete Strömung und andererseits wird der Abdichtungsbereich 13 mit Argon gespült, so daß das Eindiffundieren von Luft verhindert wird. Der Strömungsverlauf ist in der Figur 2 durch Pfeile dargestellt. Details der Abdichtung 13 und einer Produktaufnahme 14 sind in der Figur 3 abgebildet.

Die Abdichtung 13 besteht beim ersten Ausführungsbeispiel aus einem Dichtungsring 13a mit U-förmigem Querschnitt, der zwei konzentrisch angeordnete, ringförmige Dichtungsflächen aufweist, einem aufblasbaren, ringförmigen Schlauch 13b und Trockengleitlagersegmenten 13c, die auf die Dichtungsflächen aufgeklebt sind. Mittels Druckluft L wird der Schlauch 13b aufgeblasen und der Dichtungsring 13a mit den Trockengleitlagersegmenten 13c an den Glove-Box-Boden 11 gepreßt. Die Trockengleitlagersegmente 13c bestehen aus Polytetrafluoräthylen (auch bekannt als TEFLON®) oder aus einem Vinylidenfluorid-Hexafluorpropylen-Copolimerisat (auch bekannt unter dem Namen VITON®) und werden im letzteren Fall mit Hochvakuumfett geschmiert. Der im Querschnitt U-förmige Dichtungsring 13a und der Glove-Box-Boden 11 definieren einen Sperrkanal 22, der mit Argon gespült wird. Hierzu dienen die Öffnungen 22a, 22b. Dieses Argon-Spülgas wird, im Gegensatz zu dem Argon im Innenraum der Glove-Box, nicht zur Argon-Reinigungsanlage zurückgeführt. Der Glove-Box-Boden 11 und das als Montageplattform dienende niedere Deckenteil 10a sind mit parallel zum Seitenteil 10b verlaufenden, übereinandergreifenden Trennwänden 29, 30 ausgestattet, die den Abdichtungsbereich gegen den restlichen Innenraum 12 abschatten. Etwaige durch die Abdichtung 13 eingedrungene gasförmige Verunreinigungen werden hier durch die Absaugvorrichtungen 20 zusammen mit dem abgesaugten Argon der Argonreinigungsanlage R zugeführt.

Die Produktaufnahmen 14 sind gasdicht mit dem Boden 11 verschraubt. Sie besitzen eine den Glove-Box-Boden 11 durchstoßende zylindrische Durchführung 23, die mit einem spannbaren Dichtring 24 ausgestattet ist. In dieser Durchführung 23 wird die rohrartige Verlängerung des Entladungsgefäßes 15, das in einem Montagerahmen 25 fixiert ist, gasdicht gehaltert, so daß das Entladungsvolumen mit dem Innenraum der Glove-Box kommunizieren kann. Die dem Glove-Box-Innenraum 12 zugewandte Öffnung der Durchführung 23 ist in Figur 3 gasdicht an den Spülkanal 26 einer Argonspülvorrichtung 27, die zum Spülen des Entladungsvolumens dient, angeschlossen. Der Spülkanal 26 ist an einem Gestell 31 befestigt und kann durch Anheben und Drehen des Gestells 31 von der Produktaufnahme 14 entfernt werden, so daß vom Glove-Box-Innenraum 12 her die Füllungskomponenten und das obere, dem Innenraum 12 zugewandte Elektrodensystem in das Entladungsgefäß 15 eingebracht werden können.

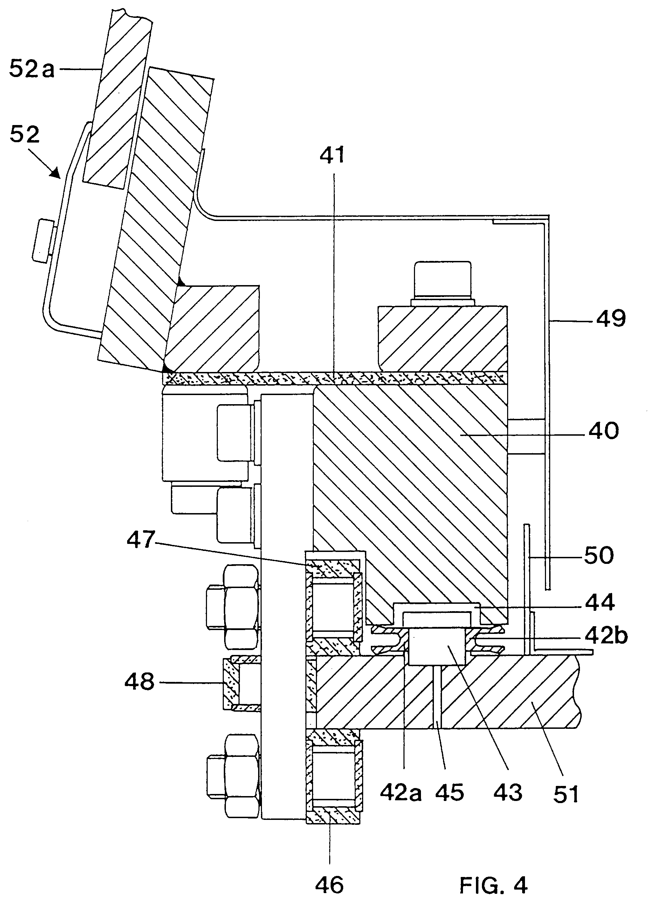

Figur 4 zeigt einen Querschnitt durch die Abdichtung der Glove-Box gemäß eines zweiten Ausführungsbeispiels. Dieses zweite Ausführungsbeispiel unterscheidet sich vom ersten Ausführungsbeispiel nur durch die Abdichtung des Glove-Box-Bodens 51. Die Abdichtung besitzt ein ringförmiges Abdichtelement 40, das über eine Gummiplatte 41 mit den Seitenteilen 52b der Glove-Box-Haube 52 verschraubt ist. Das Abdichtelement 40 liegt auf zwei konzentrisch zur Drehachse des Glove-Box-Bodens 51 angeordneten Dichtungsringen 42a, 42b aus Teflon auf, die mittels mehrerer Befestigungsvorrichtungen 43 mit dem Glove-Box-Boden 11 verschraubt sind, so daß das Abdichtungselement 40 bei einer Rotation des Glove-Box-Bodens 51 auf den Teflondichtungsringen 42a, 42b gleitet. Die beiden Dichtungsringe 42a, 42b bilden zusammen mit dem Glove-Box-Boden 51 und dem Abdichtungselement 40 einen ringförmigen Sperrkanal 44, der über Öffnungen 45 im Glove-Box-Boden 51 mit Inertgas, vorzugsweise Argon, gespült wird. Der Glove-Box-Boden 51 und das ringförmige, auf den Teflonringen 42a, 42b gleitende Abdichtungselement 40 werden mittels einer Vielzahl von Rollböcken 46, 47, 48, die an dem Abdichtungselement 40 befestigt sind, genau zueinander positioniert. Zwei übereinander greifende Trennwände 49, 50 schirmen das Abdichtungselement 40 gegen den Innenraum der Glove-Box ab. Die Trennwand 49 ist am Seitenteil 52b der Glove-Box-Haube 52 befestigt und die Trennwand 50 ist am Glove-Box-Boden 51 fixiert.

Es ist beispielsweise möglich, beim zweiten Ausführungsbeispiel die Teflondichtungsringe 42a, 42b statt am Glove-Box-Boden 51 an dem Abdichtungselement 40 zu befestigen, so daß der Glove-Box-Boden 51 auf den Dichtungsringen 42a, 42b gleitet. Außerdem kann die äußere Form der Glove-Box, insbesondere die Gestalt der Glove-Box-Haube 10, 52 beinahe beliebig variiert werden. Beispielsweise kann sie quaderförmig oder zylindrisch ausgeführt werden.

## Patentansprüche

1. Glove-Box mit einem drehbar gelagerten Boden (2; 11; 51) sowie Seiten- (1b; 10b; 52b) und Deckenteilen (1a; 10a, 10a'), die einen gasdicht verschlossenen Innenraum (12) bilden,
dadurch gekennzeichnet, daß
der Boden (2; 11; 51) mit Produktaufnahmen (3; 14), die eine gasdicht verschließbare Durchführung (23) besitzen, ausgestattet ist, wobei die Produktaufnahmen (3; 14) entlang eines Kreises oder Kreisbogens, konzentrisch zur Drehachse des Bodens (2; 11; 51) angeordnet sind und das zu bearbeitende Produkt oder Halbzeug derart (4; 15) haltern, daß der unter Schutzgasatmosphäre zu bearbeitende Teilbereich des Produktes oder Halbzeuges mit dem Innenraum (12) der Glove-Box in Verbindung steht bzw. im Innenraum (12) der Glove-Box angeordnet und für innerhalb der Glove-Box montierte Bearbeitungsvorrichtungen (16) zugänglich ist, während gleichzeitig ein anderer Teilbereich desselben Produktes (4; 15) oder Halbzeuges außerhalb des Glove-Box-Innenraumes (12) angeordnet oder dort für die Bearbeitung durch außerhalb der Glove-Box montierte Arbeitsgeräte (18) verfügbar ist.

2. Glove-Box nach Anspruch 1, dadurch gekennzeichnet, daß die Bearbeitungsvorrichtungen (16) und die Arbeitsgeräte (18) jeweils auf einer Montageplatte (10a, 17) ober- bzw. unterhalb des Glove-Box-Bodens (2; 11; 51), entlang des durch die Produktaufnahmen (14) definierten Kreises bzw. Kreisbogens montiert sind.

3. Glove-Box nach Anspruch 1, dadurch gekennzeichnet, daß die Abdichtung (13) des Glove-Boxbodens (11) aus einer mit Trockengleitlagersegmenten (13c) versehenen ringförmigen Dichtung (13a) besteht.

4. Glove-Box nach Anspruch 3, dadurch gekennzeichnet, daß die Dichtung (13a) mittels eines aufblasbaren, ringförmigen Schlauches (13b) gegen den Glove-Box-Boden (11) gepreßt wird.

5. Glove-Box nach Anspruch 1, dadurch gekennzeichnet, daß die Abdichtung des Glove-Box-Bodens 51
- ein ringförmiges Abdichtungselement (40) besitzt, das mit den Glove-Box-Seitenteilen (52b) gasdicht verbunden ist,
- zwei konzentrisch zur Drehachse des Glove-Box-Bodens (51) angeordnete Dichtungsringe (42a, 42b) aufweist, die einen Verschluß zwischen dem drehbaren Glove-Box-Boden (51) und dem ringförmigen Abdichtungselement (40) herstellen,
- der drehbare Glove-Box-Boden (51) und das Abdichtungselement (40) mit Hilfe von Rollböcken (46, 47, 48) zueinander positioniert sind.

6. Glove-Box nach Anspruch 5, dadurch gekennzeichnet, daß die Dichtungsringe (42a, 42b) aus Polytetrafluoräthylen bestehen.

7. Glove-Box nach Anspruch 5, dadurch gekennzeichnet, daß die Dichtungsringe (42a, 42b) am Glove-Box-Boden (51) fixiert sind.

8. Glove-Box nach einem oder mehreren der vorhergehenden Ansprüche, dadurch gekennzeichnet, daß die Abdichtung (5a, 5b; 13a, 13c; 40, 42a, 42b) des Glove-Box-Bodens (11; 51) einen ringförmigen Sperrkanal (22; 44) bildet, der mit Inertgas gespült wird.

9. Glove-Box nach Anspruch 1, dadurch gekennzeichnet, daß der Druck im Innenraum (12) der Glove-Box größer als der Außendruck ist.

10. Glove-Box nach Anspruch 1, dadurch gekennzeichnet, daß die zu bearbeitenden Produkte oder Halbzeuge (4; 15) Gefäße von elektrischen Lampen sind.

## Claims

1. Glove box having a rotatably mounted floor (2; 11; 51), and side parts (1b; 10b; 52b) and ceiling parts (1a; 10a, 10a'), which form an interior (12) which is sealed in a gas-tight fashion, characterized in that the floor (2; 11; 51) is fitted with product receptacles (3; 14) which have a bushing (23) which is sealable in a gas-tight fashion, the product receptacles (3; 14) being arranged along a circle or circular arc, in a fashion concentric with the axis of rotation of the floor (2; 11; 51), and holding the product or semi-finished product (4; 15) which is to be processed in such a way that the subregion of the product or semi-finished product which is to be processed under an inert-gas atmosphere is connected to the interior (12) of the glove box or is arranged in the interior (12) of the glove box and is accessible for processing devices (16) mounted inside the glove box while, at the same time, another subregion of the same product or semi-finished product (4; 15) is arranged outside the glove box interior (12) or is accessible there for processing by means of tools (18) mounted outside the glove box.

2. Glove box according to Claim 1, characterized in that the processing devices (16) and the tools (18) are respectively mounted on a mounting plate (10a, 17) above or below the glove box floor (2; 11; 51) along the circle or circular arc defined by the product receptacles (14).

3. Glove box according to Claim 1, characterized in that the sealing arrangement (13) of the glove box floor (11) comprises an annular seal (13a) provided with dry sliding bearing segments (13c).

4. Glove box according to Claim 3, characterized in that the sealing arrangement (13a) is pressed against the glove box floor (11) by means of an inflatable, annular tube (13b).

5. Glove box according to Claim 1, characterized in that the sealing arrangement of the glove box floor 51
- has an annular sealing element (40) which is connected in a gas-tight fashion to the glove box side walls (52b),
- has two sealing rings (42a, 42b) which are arranged concentric with the axis of rotation of the glove box floor (51) and produce a seal between the rotatable glove box floor (51) and the annular sealing element (40),
- the rotatable glove box floor (51) and the sealing element (40) are positioned relative to one another with the aid of bogies (46, 47, 48).

6. Glove box according to Claim 5, characterized in that the sealing rings (42a, 42b) consist of polytetrafluoroethylene.

7. Glove box according to Claim 5, characterized in that the sealing rings (42a, 42b) are fixed on the glove box floor (51).

8. Glove box according to one or more of the preceding claims, characterized in that the sealing arrangement (5a, 5b; 13a, 13c; 40, 42a, 42b) of the glove box floor (11; 51) forms an annular blocking channel (22; 44) which is purged with inert gas.

9. Glove box according to Claim 1, characterized in that the pressure in the interior (12) of the glove box is higher than the external pressure.

10. Glove box according to Claim 1, characterized in that the products or semi-finished products (4; 15) to be processed are vessels of electric lamps.

## Revendications

1. Boîte à gant comportant un fond (2; 11; 51) monté tournant, ainsi que des parties latérales (1b; 10b; 52b) et des parties supérieures (1a; 10a; 10a'), qui forment un volume (12) intérieur fermé de manière étanche au gaz,
caractérisée en ce que
le fond (2; 11; 51) est muni de dispositifs (3; 14) de réception de produits, qui comprennent une traversée (23) qui peut être fermée de manière étanche au gaz, les dispositifs (3; 14) de réception de produits étant disposés le long d'un cercle ou d'un arc de cercle, concentriquement à l'axe de rotation du fond (2; 11; 51) et maintenant le produit (4, 15) ou le produit semi-fini à usiner, de telle manière que la zone partielle du produit ou du produit semi-fini à usiner sous atmosphère de gaz protecteur communique avec le volume (12) intérieur de la boîte à gant, ou est disposée dans le volume (12) intérieur de la boîte à gant, et est accessible à des dispositifs (16) d'usinage montés à l'intérieur de la boîte à gant, tandis que, en même temps, une autre zone partielle du même produit (4; 15) ou produit semi-fini est disposée à l'extérieur du volume (12) intérieur de la boîte à gant ou y est disponible pour l'usinage par des outils (18) montés à l'extérieur de la boîte à gant.

2. Boîte à gant suivant la revendication 1, caractérisée en ce que les dispositifs (16) d'usinage et les outils (18) sont montés sur une plate-forme (10a, 17) de montage au-dessus et au-dessous du fond (2; 11; 51) de la boîte à gant, le long du cercle ou de l'arc de cercle défini par les dispositifs (14) de réception de produits.

3. Boîte à gant suivant la revendication 1, caractérisée en ce que le dispositif (13) d'étanchéité du fond (11) de la boîte à gant est constitué d'une bague (13a) d'étanchéité annulaire, munie de segments (13c) de paliers lisses secs.

4. Boîte à gant suivant la revendication 3, caractérisée en ce que la bague (13a) d'étanchéité est pressée sur le fond (11) de la boîte à gant par un tuyau (13b) souple, annulaire, gonflable.

5. Boîte à gant suivant la revendication 1, caractérisée en ce que le dispositif d'étanchéité du fond (51) de la boîte à gant
- comprend un élément (40) d'étanchéité annulaire, qui est relié de manière étanche au gaz aux pièces (52b) latérales de la boîte à gant,
- comporte deux bagues (42a, 42b) d'étanchéité qui sont disposées concentriquement à l'axe de rotation du fond (51) de la boîte à gant, qui produisent une fermeture entre le fond (51) de la boîte à gant et l'élément (40) d'étanchéité annulaire,
- le fond (51) tournant de la boîte à gant et l'élément (40) d'étanchéité étant mis en position l'un par rapport à l'autre à l'aide de supports (46, 47, 48) à rouleaux.

6. Boîte à gant suivant la revendication 5, caractérisée en ce que les bagues (42a, 42b) d'étanchéité sont en polytétrafluoroéthylène.

7. Boîte à gant suivant la revendication 5, caractérisée en ce que les bagues (42a, 42b) d'étanchéité sont immobilisées au fond (51) de la boîte à gant.

8. Boîte à gant suivant l'une ou plusieurs des revendications précédentes, caractérisée en ce que le dispositif (5a, 5b; 13a, 13c; 40, 42a, 42b) d'étanchéité du fond (11; 51) de la boîte à gant forme un canal (22; 44) annulaire de blocage, qui est lavé par du gaz inerte.

9. Boîte à gant suivant la revendication 1, caractérisée en ce que la pression à l'intérieur (12) de la boîte à gant est plus grande que la pression extérieure.

10. Boîte à gant suivant la revendication 1, caractérisée en ce que les produits ou produits semi-finis (4; 15) à usiner sont des enceintes de lampes électriques.
